# EUROPEAN PATENT APPLICATION

(11) **EP 1 264 567 A2**
(43) Date of publication of application: **11.12.2002**
(21) Application number: 02253735.1
(22) Date of filing: 28.05.2002
(51) Int. Cl.: A47J 31/00, A47J 31/40, G07F 13/06, G07F 13/10

(54) **Cup beverage vending machine**

(30) Priority: 08.06.2001 JP 2001174012
(71) Applicant: Sanden Corporation, Isesaki-shi, Gunma 372-8502 (JP)
(72) Inventor: Sato, Takeshi, c/o Sanden Corporation, Isesaki-shi, Gunma 372-8502 (JP)
(74) Representative: Haley, Stephen

(57) **Abstract**

The present invention relates to a cup beverage vending machine capable of surely preventing a dissolution residue of a raw material. When the raw material (11) is mixed with beverage by a stirrer (7), a rotation of a stirring member (7a) is stopped temporarily, and then the stirring member (7a) is rotated again. Therefore, the beverage in a cup (10), which has formed a steady flow by means of a first rotation of the stirring member (7a), forms a turbulent flow by means of a stoppage of the stirring member (7a), so that a raw material (11) accumulating in a central portion of the cup (10) without being dissolved is dispersed, and is dissolved completely in the beverage by a second rotation of the stirring member (7a).

## Description

The present invention relates to a cup beverage vending machine in which a powdery raw material such as coffee and cocoa or the like is diluted with hot water or cold water and is poured into a cup, whereby a cup beverage is sold.

Conventionally, as a beverage vending machine of this type, there is known a machine in which a powdery raw material is charged into a cup 10 predetermined quantity of hot water or cold water is poured, a stirring member installed at a lower end of a rotating shaft is moved from an upside into the cup 10nd a beverage in the cup is stirred by rotating the stirring member, as described in, for example, Japanese Patent Publication No. 7-1509 specification.

In the conventional beverage vending machine, however, the stirring member rotates continuously in a fixed direction, so that the flow of beverage is a steady flow, and thus the beverage in the central portion of cup flows less. Therefore, a dissolution residue of raw material is produced in a central portion of cup, which poses a problem in that a quality of beverage is degraded.

Also, immediately after hot water or water is poured into a cup into which the raw material has been charged, the raw material remains at a bottom of cup in a state in which the raw material is separated from the hot water or water. Therefore, if the stirring member is lowered down to a position near the bottom of cup in this state, a rotational resistance of stirring member is increased by the undissolved raw material, so that a smooth rotation of stirring member maybe hindered. Also, by a collision with the undissolved raw material, the stirring member or the rotating shaft thereof may be damaged.

The present invention has been achieved to solve the above problems, and accordingly an object thereof is to provide a cup beverage vending machine capable of surely preventing a dissolution residue of raw material. Also, another object of the present invention is to provide a cup beverage vending machine in which defective rotation of and damage to a stirring member are not caused by an undissolved raw material.

To attain the above objects, the cup beverage vending machine in accordance with the present invention includes control means which carries out control such that after the stirring member is rotated in a predetermined direction for a predetermined time, the rotation of the stirring member is stopped for a predetermined time, and then the stirring member is rotated again.

Thereupon, when the raw material is mixed with a beverage by the stirring member, the beverage in a cup, which has formed a steady flow by means of the first rotation of the stirring member, forms a turbulent flow by means of the stoppage of the stirring member, so that the raw material liable to accumulate in the central portion of the cup without being dissolved are dispersed, and are dissolved completely in the beverage by the second rotation of the stirring member. Therefore, the raw material can be mixed with the beverage surely without producing any dissolution residue.

Also, the cup beverage vending machine in accordance with the present invention includes control means which carries out control such that after the stirring member is rotated in a predetermined direction for a predetermined time, the stirring member is rotated in the reverse direction.

Thereupon, when the raw material is mixed with the beverage by the stirring member, the beverage in the cup, which has formed a steady flow by means of the rotation in the predetermined direction of the stirring member, forms a turbulent flow by means of the reverse rotation of the stirring member. Therefore, as described above, the raw material liable to accumulate in the central portion of the cup without being dissolved are dispersed, and are dissolved completely in the beverage by the subsequent rotation of the stirring member.

Also, the cup beverage vending machine in accordance with the present invention includes control means which carries out control such that after the stirring member is moved to a predetermined upper position in the beverage in the cup 10nd is rotated at that position for a predetermined time, the stirring member is moved to a predetermined lower position in the beverage and is rotated at that position.

Thereupon, when the raw material is mixed with the beverage by the stirring member, after the stirring member is rotated at the predetermined upper position in the beverage for the predetermined time, the stirring member is moved to the predetermined lower position and is rotated at that position. Therefore, the stirring member is not brought into direct contact with the undissolved raw material immediately after hot water or water is charged, so that the stirring member can always be rotated smoothly, and damage to the stirring member and the rotating shaft thereof caused by the collision with the undissolved raw material can be prevented surely.

Also, in the cup beverage vending machine in accordance with the present invention, which has the above-described configuration, the stirring member is formed into a disk shape.

Thereupon, the weight balance in the circumferential direction of the stirring member can be made even, so that vibrations occurring at the time of rotation are prevented effectively.

In the Drawings;
FIG. 1 is a front view of a cup beverage vending machine in accordance with a first embodiment of the present invention;
FIG. 2 is a schematic configuration view of a beverage vending machine;
FIG. 3 is a block diagram showing a control system;
FIG. 4 is a perspective view of a stirring member;
FIG. 5A and 5B are explanatory views illustrating an operation of a stirring member;
FIG. 6A, 6B and 6C are explanatory views illustrating the operation of the stirring member;
FIG. 7 is a flowchart showing an operation of a control unit;
FIG. 8A, 8B, 8C and 8D are explanatory views illustrating an operation of a stirring member in accordance with a second embodiment of the present invention;
FIG. 9 is a flowchart showing the operation of the control unit;
FIG. 10A, 10B, 10C and 10D are explanatory views illustrating an operation of a stirring member in accordance with a third embodiment of the present invention; and
FIG. 11 is a flowchart showing the operation of the control unit.

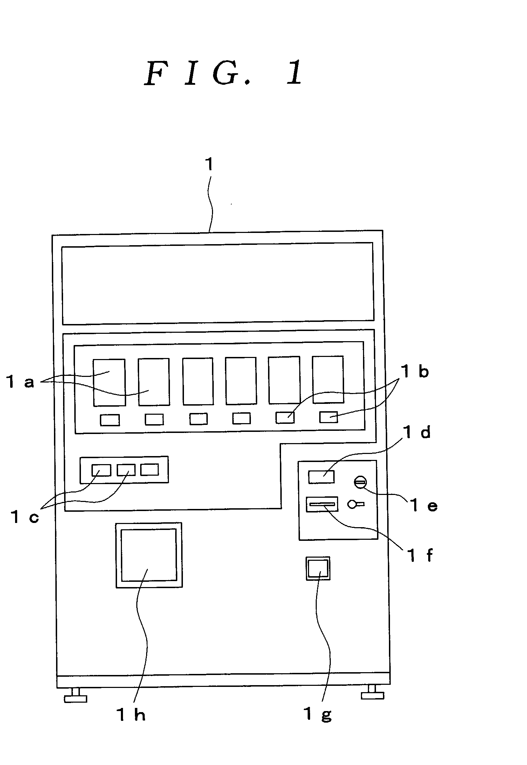

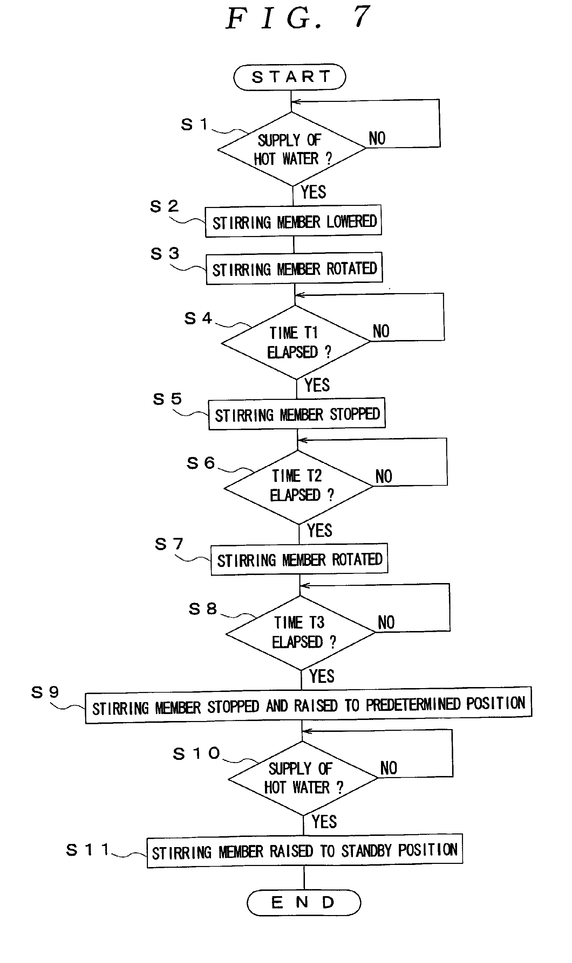

FIGS. 1 to 7 show a first embodiment of the present invention.

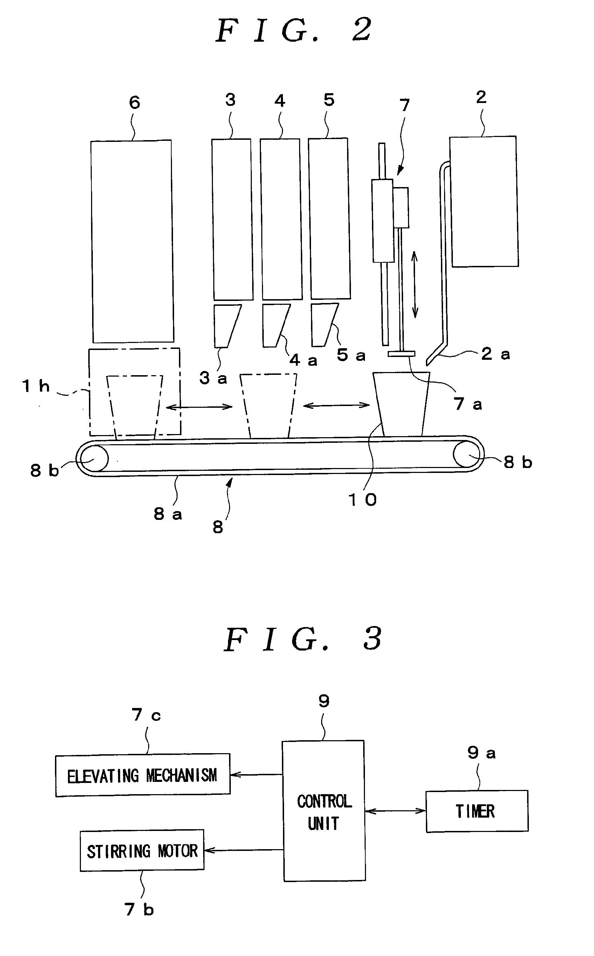

A beverage vending machine shown in FIGS. 1 and 2 includes a vending machine body 1, a hot-water tank 2 for producing hot water, a first material vessel 3 containing a raw material for coffee beverage, a second material vessel 4 containing sugar, which is used as a raw material, a third material vessel 5 containing milk, which is used as a raw material, a cup supply device 6 for supplying a cup 10, a stirrer 7 for stirring a beverage, a cup conveying mechanism 8 for conveying the cup 10, and control unit 9 for controlling an operation of the stirrer 7.

The vending machine body 1 is formed so that a front face thereof can be opened and closed, and on the front face are provided a plurality of commodity samples 1a showing various kinds of coffee beverages, a plurality of commodity selecting switches 1b corresponding to each of the commodity samples 1a, auxiliary selecting switches 1c for selecting "with sugar", "with milk", "black", etc., an amount display 1d, a coin slot 1e, a bill slot 1f, a coin return opening 1g, and a commodity take-out opening 1h.

The hot-water tank 2 is configured so that hot water of about 90°C is produced by using a heater, not shown, and a predetermined quantity of hot water is discharged through a nozzle 2a.

The first material vessel 3 is configured so that a powdery raw material for coffee beverage is contained, and a predetermined quantity of the raw material is supplied via a material chute 3a.

The second material vessel 4 is configured so that powdery sugar is contained, and a predetermined quantity of sugar is supplied via a material chute 4a.

The third material vessel 5 is configured so that powdery milk is contained, and a predetermined quantity of milk is supplied via a material chute 5a.

The cup supply device 6, having a publicly known configuration for containing cups A for selling beverages, is configured so that the cups A are supplied to the downside one by one.

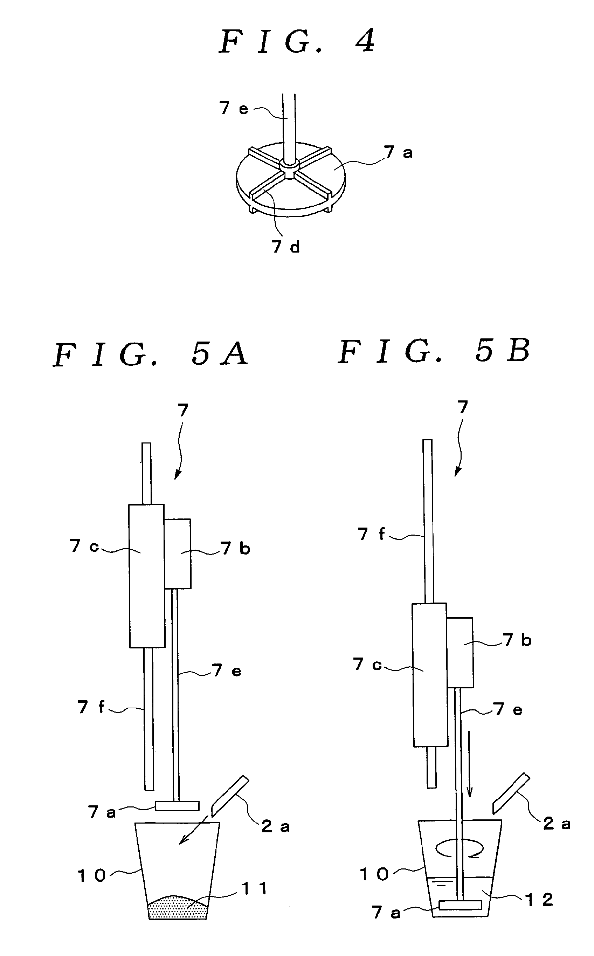

The stirrer 7 is made up of a stirring member 7a for stirring beverage, a stirring motor 7b for rotating the stirring member 7a, and an elevating mechanism 7c for moving the stirring member 7a vertically. The stirring member 7a is formed into a disk shape, and on the top and bottom surfaces thereof are provided a plurality of ridges 7d extending in a radial direction as shown in FIG. 4. The stirring motor 7b has a rotating shaft 7e extending downward, and the stirring member 7a is installed at a lower end of the rotating shaft 7e. The elevating mechanism 7c, which is provided so as to be movable vertically along a guide shaft 7f, is configured so as to be moved vertically together with the stirring motor 7b and the stirring member 7a by a driving mechanism, not shown.

The cup conveying mechanism 8 is made up of an endless belt 8a extending to a width direction, and a pair of pulleys 8b which support the belt 8a so as to be turnable. By driving the pulley 8b by means of a motor, not shown, a cup 10 mounted on a top surface of the belt 8a is moved in a width direction.

The control unit 9, which is formed by a microcomputer, is connected to the stirring motor 7b and the elevating mechanism 7c of the stirrer 7. Also, the control unit 9 is connected with a timer 9a.

In the beverage vending machine constructed as described above, after a cup 10 is supplied from the cup supply device 6 onto the cup conveying mechanism 8, the cup 10 is moved to a position under each of the material vessels 3, 4 and 5 by the cup conveying mechanism 8. A coffee material is charged from the first material vessel 3 into the cup 10, and then sugar and milk are charged from the second and third material vessels 4 and 5, respectively, as necessary. Subsequently, the cup 10 is moved to a position under the stirrer 7, and the raw materials and hot water are mixed by the stirrer 7, thereafter the cup beverage being transferred to the commodity take-out opening 1h.

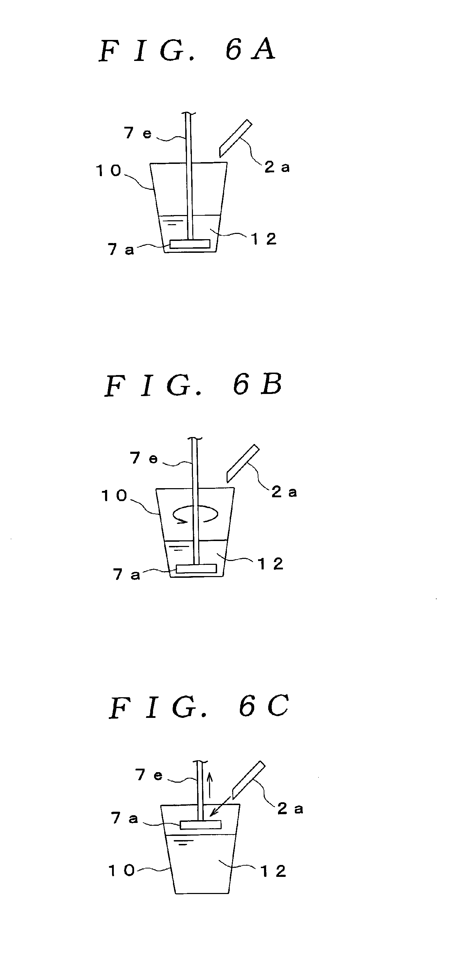

In this process, the control unit 9 operates the stirrer 7 as described below. That is, after a predetermined quantity of hot water is discharged from the nozzle 2a into the cup 10 containing raw materials 11 (S1) as shown in FIG. 5A, the stirring member 7a of the stirrer 7 is lowered to a position near the bottom of the cup 10 (S2), and the stirring member 7a is rotated in a predetermined direction (S3) as shown in FIG. 5B. The quantity of hot water supplied into the cup 10 at this stage is a part of the total supply quantity. Next, after a predetermined time T1 has elapsed from the time when the rotation of the stirring member 7a is started (S4), the rotation of the stirring member 7a is stopped (S5) as shown in FIG. 6A. After a predetermined time T2 has elapsed (S6), the stirring member 7a is rotated again (S7) as shown in FIG. 6B. Thereby, beverage 12 in the cup 10, which has formed a steady flow by means of the first rotation of the stirring member 7a, forms a turbulent flow by means of the stoppage of the stirring member 7a, so that raw materials accumulating in the central portion of the cup 10 without being dissolved are dispersed, and are dissolved completely in the beverage 12 by the second rotation of the stirring member 7a. Subsequently, after a predetermined time T3 has elapsed (S8), the rotation of the stirring member 7a is stopped, and the stirring member 7a is raised to an upper position in the cup 10 (S9) as shown in FIG. 6C. After the remaining hot water is discharged into the cup 10 (S10), the stirring member 7a is raised to a standby position above the cup 10 (S11). At this time, beverage adhering to the stirring member 7a is washed off into the cup 10 by the hot water discharged into the cup 10.

As described above, according to the beverage vending machine of this embodiment, when the raw materials are mixed with the beverage by the stirrer 7, the rotation of the stirring member 7a is stopped temporarily, and then the stirring member 7a is rotated again. Therefore, the raw materials liable to accumulate in a central portion of the cup 10 can be dispersed by the stoppage of the stirring member 7a, so that the raw materials can be mixed surely with the beverage without producing any dissolution residue.

Also, since the stirring member 7a is formed into a disk shape, the weight balance in a circumferential direction of the stirring member 7a is even, so that vibrations occurring at the time of rotation are prevented effectively.

Although the case where coffee beverage is made by diluting a powdery raw material with hot water has been shown in this embodiment, the present invention can also be applied to the case where the beverage is made by diluting a powdery raw material, for example, for fruit juice with water and by adding ice.

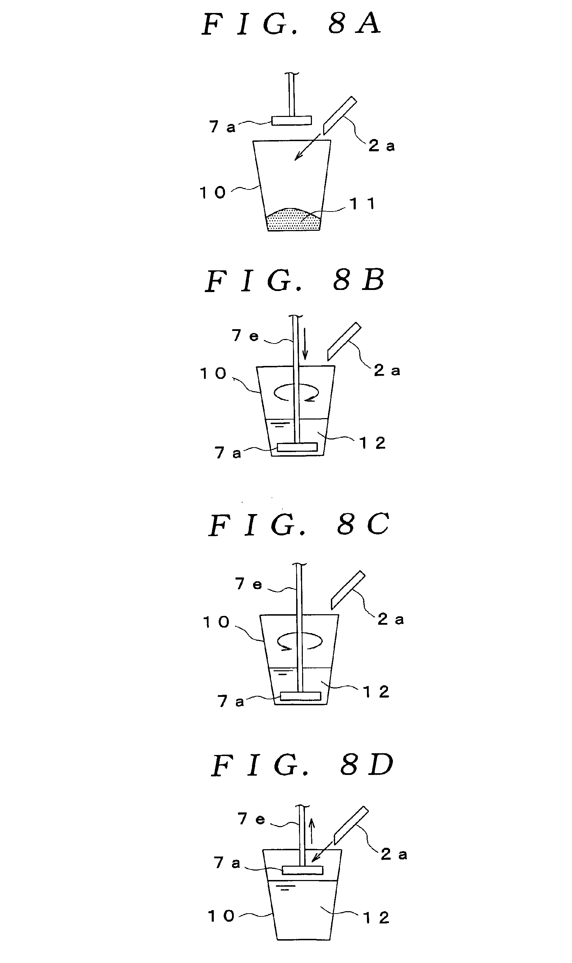

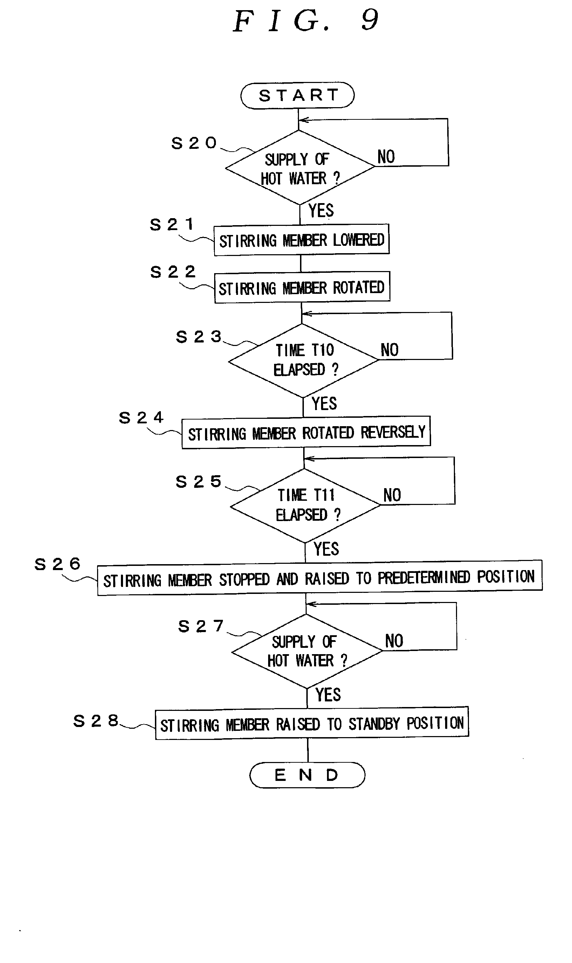

FIGS. 8 and 9 show a second embodiment of the present invention. This embodiment is different from the first embodiment merely in an operation of the stirrer 7 performed by the control unit 9. Therefore, the explanation of other constructions and operations is omitted.

In this embodiment, the control unit 9 operates the stirrer 7 as described below. First, after a predetermined quantity of hot water is discharged from the nozzle 2a into a cup 10 containing raw materials 11 (S20) as shown in FIG. 8A, the stirring member 7a of the stirrer 7 is lowered to a position near the bottom of the cup 10 (S21), and the stirring member 7a is rotated in a predetermined direction (S22) as shown in FIG. 8B. The quantity of hot water supplied into the cup 10 at this stage is a part of the total supply quantity. Next, after a predetermined time T10 has elapsed from the time when the rotation of the stirring member 7a is started (S23), the stirring member 7a is rotated in a direction reverse to the aforementioned direction of rotation (S24) as shown in FIG. 8C. Thereby, the beverage 12 in the cup 10, which has formed a steady flow by means of the first rotation of the stirring member 7a, forms a turbulent flow by means of the reverse rotation of the stirring member 7a, so that raw materials accumulating in the central portion of the cup 10 without being dissolved are dispersed, and are dissolved completely in the beverage 12 by the rotation of the stirring member 7a. Subsequently, after a predetermined time T11 has elapsed (S25), the rotation of the stirring member 7a is stopped, and the stirring member 7a is raised to an upper position in the cup 10 (S26) as shown in FIG. 8D. After the remaining hot water is discharged into the cup 10 (S27), the stirring member 7a is raised to a standby position above the cup 10 (S28). At this time, a beverage adhering to the stirring member 7a is washed off into the cup 10 by the hot water discharged into the cup 10.

As described above, according to the beverage vending machine of this embodiment, when the raw materials are mixed with the beverage by the stirrer 7, the stirring member 7a rotating in the predetermined direction is rotated reversely in the middle of the rotation. Therefore, the raw materials liable to accumulate in the central portion of the cup 10 can be dispersed by the reverse rotation of the stirring member 7a, so that the same effect as that of the above-described embodiment can be achieved. In this case, the stirring member 7 need not be stopped for a predetermined time as in the case of step S6, so that the mixing time of beverage can be shortened.

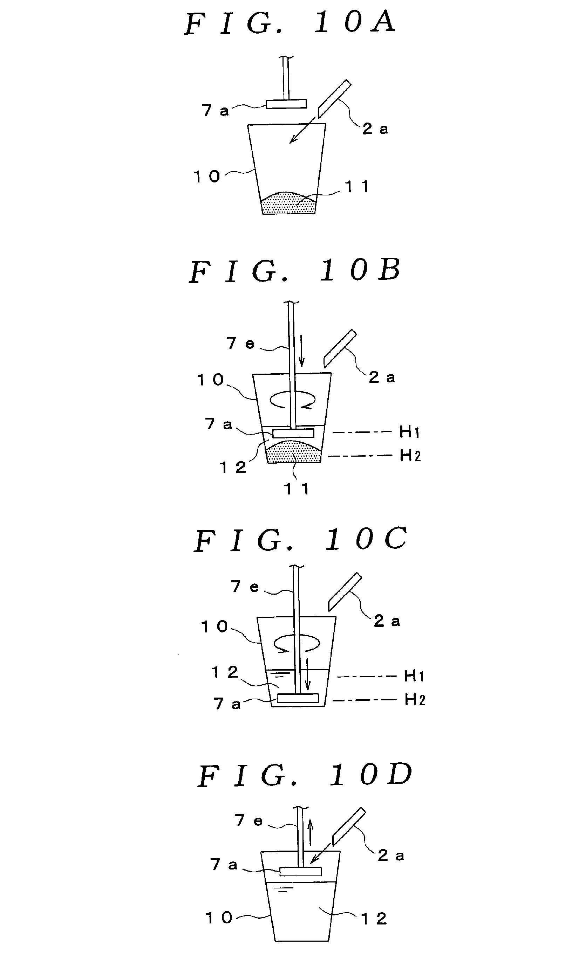

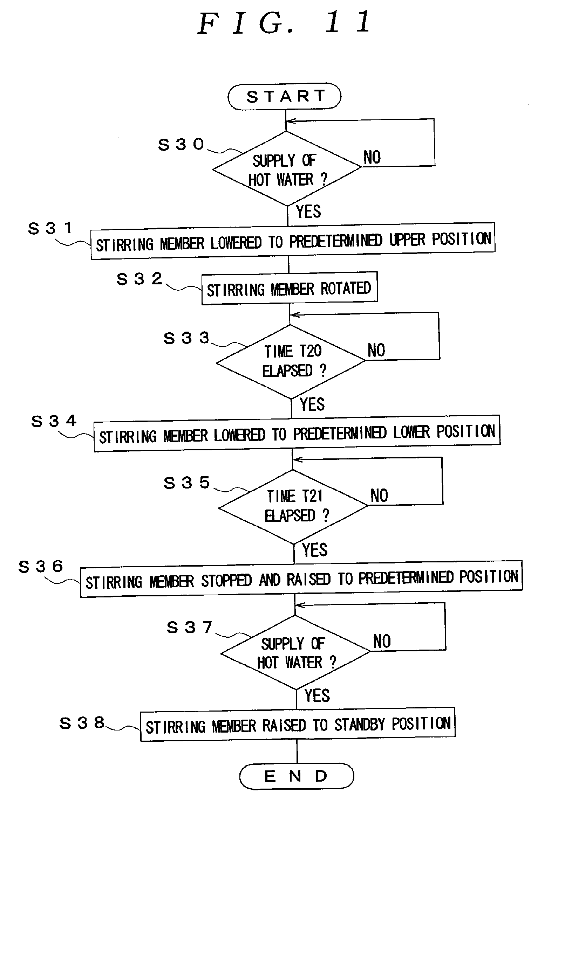

FIGS. 10 and 11 show a third embodiment of the present invention. This embodiment is different from the first embodiment merely in the operation of the stirrer 7 performed by the control unit 9. Therefore, the explanation of other constructions and operations is omitted.

That is, in this embodiment, the control unit 9 operates the stirrer 7 as described below. First, after a predetermined quantity of hot water is discharged from the nozzle 2a into a cup 10 containing raw materials 11 (S30) as shown in FIG. 10A, the stirring member 7a of the stirrer 7 is lowered to a predetermined upper position H1 at an upper part in the cup 10 (a position slightly lower than the liquid level of a beverage 12) (S31), and the stirring member 7a is rotated in a predetermined direction (S32) as shown in FIG. 10B. Thereby, the stirring member 7a is not brought into direct contact with the undissolved raw materials B immediately after hot water is charged. The quantity of hot water supplied into the cup 10 at this stage is a part of the total supply quantity. Next, after a predetermined time T20 has elapsed from the time when the rotation of the stirring member 7a is started (S33), the stirring member 7a is lowered to a predetermined lower position H2 at a lower part in the cup 10 (a position near the bottom of the cup 10) (S34) as shown in FIG. 10C. At this time, the raw materials in the beverage 12 have been substantially dissolved by the rotation of the stirring member 7a at the aforementioned upper position H1, so that the raw materials do not hinder the rotation of stirring member 7a. Subsequently, after a predetermined time T21 has elapsed (S35), the rotation of the stirring member 7a is stopped, and the stirring member 7a is raised to an upper position in the cup 10 (S36) as shown in FIG. 10D. After the remaining hot water is discharged into the cup 10 (S37), the stirring member 7a is raised to a standby position above the cup 10 (S38). At this time, a beverage adhering to the stirring member 7a is washed off into the cup 10 by the hot water discharged into the cup 10.

As described above, according to the beverage vending machine of this embodiment, when the raw materials are mixed with the beverage by the stirrer 7, after the stirring member 7a is rotated at the upper position in the beverage 12 for a predetermined time, the stirring member 7a is moved to the lower position in the beverage 12 and is rotated, so that the stirring member 7a is not brought into direct contact with the undissolved raw materials B immediately after hot water is charged. Therefore, the stirring member 7a can always be rotated smoothly, and damage to the stirring member 7a and the rotating shaft 7e caused by the collision with the undissolved raw materials B can be prevented surely.

## Claims

1. A cup beverage vending machine in which a powdery raw material is charged into a cup 10 predetermined quantity of hot water or water is supplied; a stirring member installed at a lower end of a rotating shaft is moved from an upside into the cup 10nd said stirring member is rotated to stir beverage in the cup,
wherein said cup beverage vending machine is provided with control means which carries out control such that after said stirring member is rotated in a predetermined direction for a predetermined time, a rotation of said stirring member is stopped for a predetermined time, and then said stirring member is rotated again.

2. A cup beverage vending machine in which a powdery raw material is charged into a cup 10 predetermined quantity of hot water or water is supplied; a stirring member installed at a lower end of a rotating shaft is moved from an upside into the cup 10nd said stirring member is rotated to stir beverage in the cup,
wherein said cup beverage vending machine is provided with control means which carries out control such that after said stirring member is rotated in a predetermined direction for a predetermined time, said stirring member is rotated in a reverse direction.

3. A cup beverage vending machine in which a powdery raw material is charged into a cup 10 predetermined quantity of hot water or water is supplied; a stirring member installed at a lower end of a rotating shaft is moved from an upside into the cup 10nd said stirring member is rotated to stir beverage in the cup,
wherein said cup beverage vending machine is provided with control means which carries out control such that after said stirring member is moved to a predetermined upper position in the beverage in the cup 10nd is rotated at that position for a predetermined time, said stirring member is moved to a predetermined lower position in the beverage and is rotated at that position.

4. The cup beverage vending machine according to any one of claims 1 to 3, wherein said stirring member is formed into a disk shape.
